# EUROPÄISCHE PATENTSCHRIFT

(11) **EP 2 755 849 B1**
(45) Veröffentlichungstag und Bekanntmachung des Hinweises auf die Patenterteilung: **23.11.2016**
(21) Anmeldenummer: 12756527.3
(22) Anmeldetag: 12.09.2012
(51) Int. Cl.: B60M 1/34, H01R 4/34, H01R 41/00

(54) **SCHLEIFLEITUNG MIT ÜBER EINEN VERBINDER LÖSBAR VERBINDBAREN STROMSCHIENEN**
CONTACT LINE WITH BUSBARS THAT CAN BE DETACHABLY CONNECTED BY A CONNECTOR
LIGNE DE CONTACT COMPORTANT DES BARRES OMNIBUS POUVANT ÊTRE CONNECTÉES AMOVIBLES AU MOYEN D'UN CONNECTEUR

(30) Priorität: 16.09.2011 DE 102011053724
(43) Veröffentlichungstag der Anmeldung: 23.07.2014
(73) Patentinhaber: Terex MHPS GmbH, 40597 Düsseldorf (DE)
(72) Erfinder: LINDENAU, Thomas, 45721 Haltern am See (DE); KREBS, Wolfgang, 58300 Wetter (DE); BIRKIGT, Reinhard, 58313 Herdecke (DE); NERGER, Klaus, Klemens, 47506 Neukirchen-Vluyn (DE); EKRUTT, Kai-Uwe, 58313 Herdecke (DE); KRÖPKE, Thomas, 58300 Wetter (DE); LANGE, Gerhard, 46236 Bottrop (DE)
(74) Vertreter: Moser Götze & Partner Patentanwälte mbB
(86) Internationale Anmeldenummer: PCT/EP2012/067851
(87) Internationale Veröffentlichungsnummer: WO 2013/037832

(56) Entgegenhaltungen:
- US-A- 2 961 499
- US-A- 4 106 599

## Beschreibung

Die Enfindung betrifft eine Schleifleitung mit mindestens zwei aufeinander folgenden Stromschienen, die mit einem Verbinder lösbar miteinander verbindbar sind, mit einem ersten Aufnahmeteil, das an einem ersten Ende einer ersten Stromschiene lösbar befestigt ist, und mit einem zweiten Aufnahmeteil, das an einem zweiten Ende einer zweiten Stromschiene lösbar befestigt ist, und einem Verbindungsteil, über das das erste Aufnahmeteil und das zweite Aufnahmeteil in einem Betriebszustand lösbar miteinander verbindbar sind.

Aus der deutschen Patentschrift DE 198 07 792 C2 ist eine Anordnung zur mechanischen und elektrischen Verbindung von zueinander fluchtend ausgerichteten Stromschienen bekannt, die im Inneren einer Schleifleitung für mobile Stromabnehmerwagen angeordnet sind. Die Anordnung umfasst die zu verbindenden Stromschienen und jeweils einen Verbinder für die Verbindung von zwei Enden von zwei Stromschienen. Jeder Verbinder umfasst zwei c-förmige Aufnahmeteile, die jeweils einen Aufnahmeraum begrenzen. In einem Betriebszustand ist jeweils ein Ende einer Stromschiene in einen der Aufnahmeräume eingesteckt. Um die Stromschienen und die Aufnahmeteile beziehungsweise die Aufnahmeteile sowohl mechanisch als auch elektrisch miteinander zu verbinden, werden die Aufnahmeteile jeweils mittels einer Gewindeschraube an den Enden der Stromschiene angeklemmt und mittels einer Gewindemutter über ein u-förmiges Verbindungsteil auch miteinander verbunden. Das Verbindungsteil weist hierfür an einem ersten Ende, das mit einem ersten Aufnahmeteil verbunden ist, eine erste Bohrung auf, durch die die Gewindeschraube geführt ist und in deren Bereich die Gewindemutter klemmend anliegt. Ein zweites Ende des Stegs weist eine trichterförmige Öffnung auf. Zur Verbindung des Verbindungsteils mit dem zweiten Aufnahmeteil wird eine bereits teilweise in das zweite Aufnahmeteil eingedrehte zweite Schraube mit einer aufgeschraubten Mutter mit ihrem Schaft in die trichterförmige Öffnung eingeschoben und die Mutter festgezogen, so dass die Mutter auf der Oberseite des Stegs zur Auflage kommt. Durch die mechanische Verbindung wird auch die elektrische Verbindung zwischen den mit den beiden Aufnahmeteilen verbundenen Stromschienen hergestellt. Da sowohl die mechanische als auch die elektrische Verbindung der Stromschienen über die Aufnahmeteile und das Verbindungsteil erfolgt, bestehen diese aus elektrisch leitfähigen Materialien mit entsprechender mechanischer Festigkeit.

In der Patentschrift US 3 609 254 ist ein Verbinder für zwei aufeinander folgende Stromschienen beschrieben. Der Verbinder umfasst zwei Verbindungsteile, zwischen denen die Stromschienen mit ihren einander zugewandten Enden festgeklemmt werden. Hierfür werden die Verbindungsteile ohne zusätzliche Aufnahme- oder Leitteile ausschließlich über Verschraubungen aneinander gezogen.

Ein vergleichbarer Verbinder ist auch aus der Gebrauchsmusterschrift DE 75 07 091 bekannt.

Aus der Patentschrift US 4 016 961 ist eine Vorrichtung zum Aufhängen einer einteilig ausgebildeten Stromschiene bekannt.

Aus der Patentschrift US 2 961 499 A ist Schleifleitung bekannt, die zur Verbindung zweier Stromschienen einen Verbinder mit zwei blockförmigen Aufnahmeteilen und einem die Aufnahmeteile miteinander verbindenden Verbindungsteil umfasst. Das Verbindungsteil besteht aus einem länglichen und flexiblen Drahtgeflecht, dessen gegenüberliegende Enden jeweils von einer abgeflachten Hülse eingekapselt sind. Die Hülsen sind unlösbar nach Art von Aderendhülsen an den Enden des Verbindungsteils festgepresst. Um die elektrische Leitfähigkeit des Verbinders zu optimieren, können die Hülsen und die Stromschienen mit einer bimetallischen Beschichtung aus Kupfer und Aluminium versehen werden

Die Patentschrift US 4 106 599 A offenbart eine Schleifleitung mit einem Verbinder, der ein blockförmiges Verbindungsteil zur Verbindung zweier Stromschienen umfasst.

Der Erfindung liegt die Aufgabe zugrunde, eine verbesserte Schleifleitung mit mindestens zwei zueinander fluchtend ausgerichteten und über einen Verbinder lösbar verbindbaren Stromschienen bereitzustellen.

Diese Aufgabe wird durch eine Schleifleitung mit den Merkmalen des Anspruchs 1 gelöst. In den Unteransprüchen 2 bis 8 sind vorteilhafte Ausgestaltungen der Erfindung angegeben.

Erfindungsgemäß wird eine verbesserte Schleifleitung mit mindestens zwei aufeinander folgenden Stromschienen, die mit einem Verbinder lösbar miteinander verbindbar sind, mit einem ersten Aufnahmeteil, das an einem ersten Ende einer ersten Stromschiene lösbar befestigt ist, und mit einem zweiten Aufnahmeteil, das an einem zweiten Ende einer zweiten Stromschiene lösbar befestigt ist, und einem Verbindungsteil, über das das erste Aufnahmeteil und das zweite Aufnahmeteil in einem Betriebszustand lösbar miteinander verbindbar sind, dadurch erreicht, dass in dem Betriebszustand das Verbindungsteil zusätzlich zu dem ersten Aufnahmeteil über ein erstes Leitteil mit der ersten Stromschiene und zusätzlich zu dem zweiten Aufnahmeteil über ein zweites Leitteil mit der zweiten Stromschiene elektrisch verbunden ist, das erste und das zweite Leitteil lösbar mit dem Verbindungsteil verbindbar sind und das erste Leitteil einen geringeren spezifischen elektrischen Widerstand als das erste Aufnahmeteil und das zweite Leitteil einen geringeren spezifischen elektrischen Widerstand als das zweite Aufnahmeteil aufweist.

Insbesondere die Strombelastbarkeit des Verbinders wird erhöht, indem hierbei im Betriebszustand eine direkte und unmittelbare elektrische Verbindung zwischen den Stromschienen, den Leitteilen und dem Verbindungsteil derart hergestellt ist, dass nicht mehr nur die zur Verbindung der Stromschienen mit dem Verbindungsteil verwendeten Aufnahmeteile sowie Befestigungsmittel, sondern zusätzlich auch die Leitteile zur Strom- beziehungsweise Spannungsübertragung dienen. Hierfür ist es besonders vorteilhaft, dass durch die Verwendung von Leitteilen auch eine erhebliche Einschränkung der für die Stromübertragung verfügbaren Querschnitte beziehungsweise Kontaktflächen vermieden wird. Dies geschieht dadurch, dass die sich ansonsten bei einem Verbinder ohne Leitteile ergebenden schmalen und linienartigen beziehungsweise kleinflächigen Kontaktflächen an den Stirnseiten der fluchtend und stoßartig aneinander grenzenden Enden der Stromschienen sowie in den Auflagebereichen zwischen der jeweiligen Stromschiene und den Aufnahmeschenkeln des zugehörigen Aufnahmeteils durch die zusätzlich eingebrachten Leitteile vergrößert werden. Insofern sind die Leitteile maßgeblich für die maximale Strombelastbarkeit der Verbindung. Durch die jeweils unterschiedlichen spezifischen elektrischen Widerstände der Leitteile gegenüber den Aufnahmeteilen wird der Übergangswiderstand zwischen den Stromschienen und dem Verbinder zusätzlich verringert. Dadurch wird die Strombelastbarkeit weiter erhöht.

In einer vorteilhaften Ausführungsform ist weiter vorgesehen, dass das erste Aufnahmeteil zumindest teilweise zwischen dem ersten Leitteil und dem Verbindungsteil und das zweite Aufnahmeteil zumindest teilweise zwischen dem zweiten Leitteil und dem Verbindungsteil angeordnet ist.

Eine besonders einfache Montage des Verbinders wird dadurch erreicht, dass das erste Aufnahmeteil einen c-förmigen ersten Aufnahmeraum mit zwei gegenüberliegenden und voneinander beabstandeten ersten Auflageteilen umfasst, in den das erste Ende der ersten Stromschiene im Betriebszustand eingesteckt ist und sich klemmend abstützt, und das zweite Aufnahmeteil einen c-förmigen zweiten Aufnahmeraum mit zwei gegenüberliegenden und voneinander beabstandeten zweiten Auflageteilen umfasst, in den das zweite Ende der zweiten Stromschiene im Betriebszustand eingesteckt ist und sich klemmend abstützt.

Die Strombelastbarkeit wird in besonderem Maße dadurch erhöht, dass das erste Leitteil und das zweite Leitteil jeweils u-förmig mit einem ersten Leitarm und einem zweiten Leitarm ausgebildet sind. Dadurch werden die zur Stromübertragung verfügbaren Kontaktflächen in besonders vorteilhafter Weise erhöht.

In konstruktiv einfacher Bauweise ist zur Erhöhung der Kontaktflächen zwischen den Leitteilen und dem Verbindungsteil sowie den Stromschienen vorgesehen, dass der zweite Leitarm des ersten Leitteils und der zweite Leitarm des zweiten Leitteils an dem Verbindungsteil, der erste Leitarm des ersten Leitteils an der ersten Stromschiene und der erste Leitarm des zweiten Leitteils an der zweiten Stromschiene anliegen.

Für eine kleinbauende Anordnung zur Verbindung der Stromschienen ist es vorteilhaft, dass das erste Leitteil zumindest teilweise von dem ersten Aufnahmeraum des ersten Aufnahmeteils und das zweite Leitteil zumindest teilweise von dem zweiten Aufnahmeraum des zweiten Aufnahmeteils aufgenommen ist.

Eine kleinbauende Anordnung wird zusätzlich dadurch verbessert, dass das erste Leitteil und das erste Aufnahmeteil so angeordnet sind, dass ein erster Steg des ersten Aufnahmeteils zwischen den Leitarmen des ersten Leitteils angeordnet ist, und das zweite Leitteil und das zweite Aufnahmeteil so angeordnet sind, dass ein zweiter Steg des zweiten Aufnahmeteils zwischen den Leitarmen des zweiten Leitteils angeordnet ist.

Die Montage des Verbinders wird zusätzlich dadurch vereinfacht, dass die erste Stromschiene, das erste Aufnahmeteil und das erste Leitteil miteinander zu einer ersten Verbindungseinheit lösbar verbunden sind und die zweite Stromschiene, das zweite Aufnahmeteil und das zweite Leitteil miteinander zu einer zweiten Verbindungseinheit lösbar verbunden sind.

Ein Ausführungsbeispiel der Erfindung wird anhand der nachfolgenden Beschreibung näher erläutert. Es zeigen:
Figur 1 eine Ansicht eines Schleifleitungsprofils für Schleifleitungen,
Figur 2 eine Ansicht zweier Stromschienen einer Schleifleitung mit einem Verbinder in einem vormontierten Zustand,
Figur 3 eine Ansicht der Stromschienen gemäß Figur 2 in einem Längsschnitt,
Figur 4 eine Ansicht der Stromschienen in einem ersten Querschnitt A-A gemäß Figur 3 und
Figur 5 eine Ansicht der Stromschienen in einem zweiten Querschnitt B-B gemäß Figur 3.

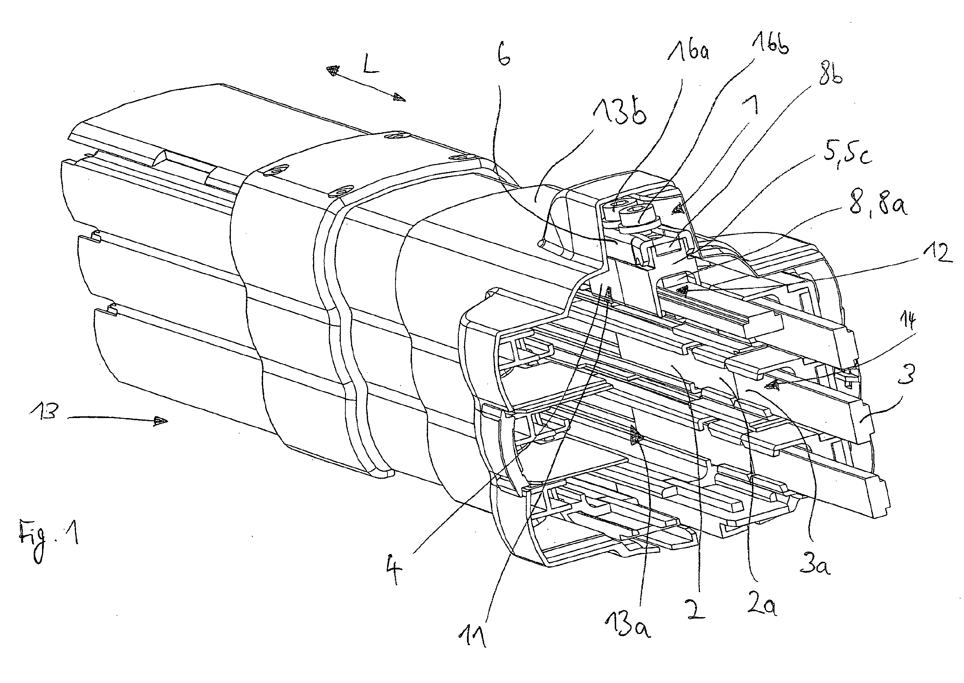

In Figur 1 ist eine Ansicht eines Schleifleitungsprofils 13 für Schleifleitungen 14 gezeigt, das sich in einer Längsrichtung L erstreckt, einen c-förmigen Querschnitt aufweist und nach unten offen ist. In einem Innenraum 13a des Schleifleitungsprofils 13 ist ein nicht dargestellter mobiler Stromabnehmerwagen in Längsrichtung L und entlang des Schleifleitungsprofils 13 verfahrbar. Um den Stromabnehmerwagen mit elektrischer Energie beziehungsweise elektrischen Steuersignalen versorgen zu können, sind im Innenraum 13a des Schleifleitungsprofils 13 insgesamt sieben Schleifleitungen 14 angeordnet, von denen in Figur 1 exemplarisch vier abgebildet sind.

Zur Befestigung der Schleifleitungen 14 sind im Innenraum 13a des Schleifleitungsprofils 13 sieben Taschen vorgesehen, die über den Umfang des Innenraums 13a verteilt, parallel zueinander und voneinander beabstandet angeordnet sind. Die sich ebenfalls in der Längsrichtung L erstreckenden Taschen sind im Querschnitt gesehen c-förmig ausgebildet und zeigen jeweils mit einer Taschenöffnung in Richtung des Innenraums 13a. Die Schleifleitungen 14 sind in Längsrichtung L in die Taschen eingeschoben, wobei jede Tasche eine Schleifleitung 14 aufnimmt und über die jeweilige Taschenöffnung Zugang für eine elektrische Kontaktierung durch den Stromabnehmerwagen gewährt.

Entsprechend der zu überbrückenden Distanzen, werden mehrere Schleifleitungsprofile 13 mit Schleifleitungen 14 hintereinander angeordnet und bei Bedarf hinsichtlich ihrer Länge angepasst. Hierbei sind dann mindestens eine erste Stromschiene 2 eines ersten Schleifleitungsprofils 13 mit einer zweiten Stromschiene 3 eines zweiten Schleifleitungsprofils 13 in einem Betriebszustand zueinander fluchtend ausgerichtet und an ihren sich zugewandten ersten und zweiten Enden 2a, 3a über einen Verbinder 1 sowohl mechanisch als auch elektrisch verbunden.

Im Bereich der Verbinder 1 ist das Schleifleitungsprofil 13 in Längsrichtung L gesehen offen und über zwei in Längsrichtung verschiebbare Abdeckkappen 13b verschließbar. Die Abdeckkappen umschließen hierbei den äußeren Umfang der Schleifleitungsprofile 13 und bilden darüber hinaus zur Aufnahme der Verbinder 1 haubenartige Verbreiterungen beziehungsweise Erhöhungen aus, die jeweils im Bereich der Schleifleitungen 14 angeordnet sind. Die mechanische Verbindung mehrerer Schleifleitungsprofile 13 erfolgt indirekt über die mittels Verbindern 1 verbundenen Schleifleitungen 14.

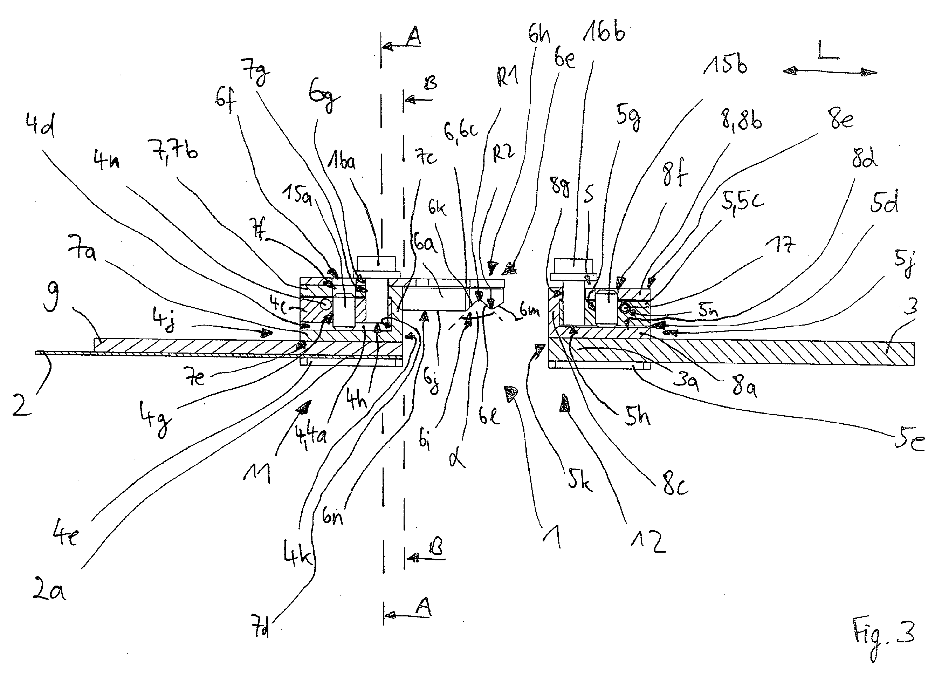

Zur Verbindung des ersten Endes 2a der ersten Stromschiene 2 und des zweiten Ende 3a der zweiten Stromschiene 3 umfasst der Verbinder 1 ein jeweils c-förmiges erstes Aufnahmeteil 4 und ein zweites Aufnahmeteil 5 sowie ein u-förmiges Verbindungsteil 6. Das erste Aufnahmeteil 4 ist über eine erste Schraubverbindung mittels einer ersten Schraube 15a (siehe Figur 3), die keinen Schraubenkopf aufweist und auch als Gewindestift oder Madenschraube bekannt ist, zusammen mit einem u-förmigen ersten Leitteil 7 an einem ersten Ende 2a der ersten Stromschiene 2 angeklemmt und zu einer ersten Verbindungseinheit 11 verbunden. In gleicher Weise ist das zweite Aufnahmeteil 5 über eine zweite Schraubverbindung mittels einer zweiten Schraube 15b, die ebenfalls als Madenschraube ausgeführt ist und keinen Schraubenkopf aufweist, zusammen mit einem u-förmigen zweiten Leitteil 8 an einem dem ersten Ende 2a der ersten Stromschiene 2 zugewandten zweiten Ende 3a der zweiten Stromschiene 3 angeklemmt und zu einer zweiten Verbindungseinheit 12 verbunden. Als Verbindungseinheit 11, 12 wird hierbei auch jeweils die Verbindung des ersten beziehungsweise zweiten Aufnahmeteils 4, 5 mit der ersten beziehungsweise zweiten Stromschiene 2, 3 ohne das erste beziehungsweise zweite Leitteil 7, 8 verstanden. In dem Betriebszustand ist das Verbindungsteil 6 des Verbinders 1 sowohl mechanisch als auch elektrisch über eine dritte und eine vierte Schraubverbindung mittels einer dritten Schraube 16a mit der ersten Verbindungseinheit 11 und mittels einer vierten Schraube 16b mit der zweiten Verbindungseinheit 12 verbunden, und somit auch die erste Stromschiene 2 mit der zweiten Stromschiene 3. Beide Schrauben 16a, 16b weisen Schraubenköpfe auf. Es ist jedoch auch denkbar, dass das Verbindungsteil 6 mit dem ersten Aufnahmeteil 4 unlösbar verbunden ist beziehungsweise das Aufnahmeteil 4 einteilig ausgeführt ist, wobei dann das Verbindungsteil 6 ein Bestandteil des Aufnahmeteils 4 ist.

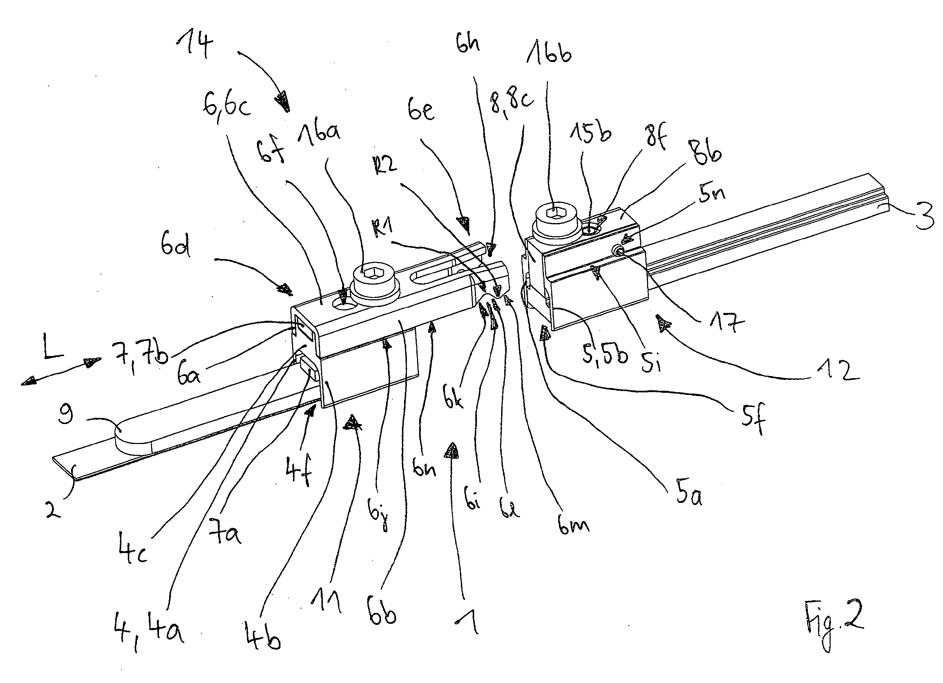

In Figur 2 ist exemplarisch eine Ansicht einer Schleifleitung 14 mit zwei Stromschienen 2, 3 und einem Verbinder 1 in einem vormontierten Zustand dargestellt. Die erste Stromschiene 2 weist einen dünnen rechteckigen Querschnitt und die zweite Stromschiene 3 einen T-förmigen und gegenüber der ersten Stromschiene 2 dickeren Querschnitt auf. Diese verschiedenen Querschnitte der Stromschienen 2, 3 sind nur dargestellt worden, um die Eignung der Verbindungseinheiten 11, 12 für verschiedene Stromschienen 2, 3 zu zeigen. In diesem vormontierten Zustand sind die erste Verbindungseinheit 11 und die zweite Verbindungseinheit 12 bereits hergestellt und die erste Verbindungseinheit 11 ist mit dem Verbindungsteil 6 über die dritte Schraube 16a verbunden. Die erste Verbindungseinheit 11 und die zweite Verbindungseinheit 12 sind nahezu in gleicher Weise aufgebaut beziehungsweise hergestellt und unterscheiden sich lediglich durch die unterschiedlichen Stromschienenquerschnitte und ein bei der ersten Verbindungseinheit 11 zusätzlich eingebrachtes und als Stabilisierung wirkendes Zwischenteil 9, das ebenfalls stromschienenförmig, das heißt länglich und flach ausgebildet ist. Daher beschränken sich die nachfolgenden Ausführungen auf die erste Verbindungseinheit 11, gelten jedoch entsprechend auch für den grundsätzlichen Aufbau und die Herstellung der zweiten Verbindungseinheit 12.

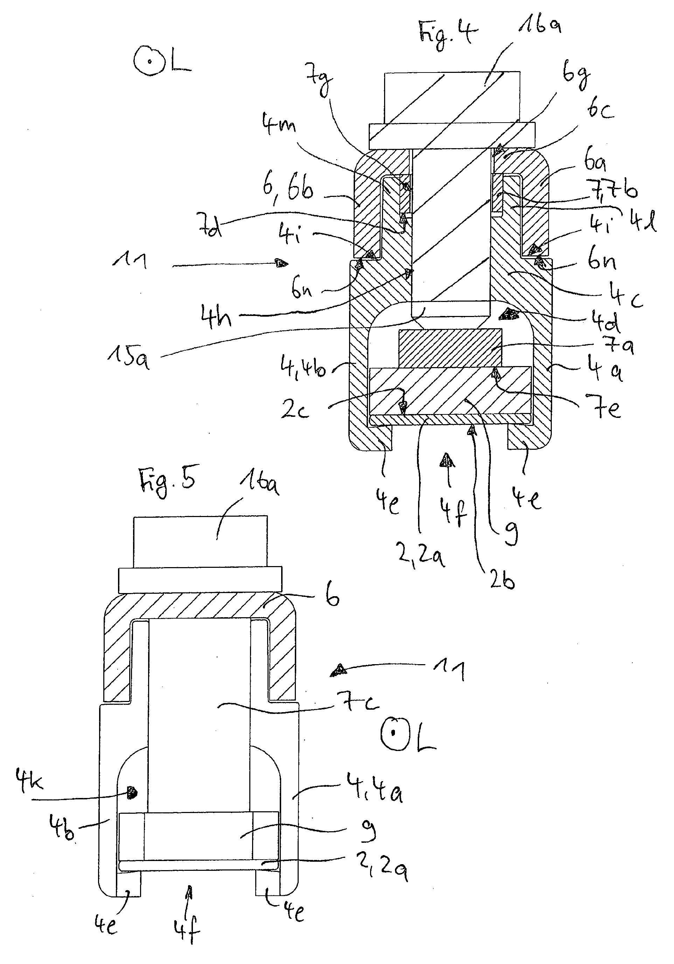

Um zur Herstellung der ersten Verbindungseinheit 11 das erste Leitteil 7 zusammen mit dem ersten Aufnahmeteil 4 an der ersten Stromschiene 2 befestigen zu können, ist das erste Aufnahmeteil 4 c-förmig ausgebildet. Die C-Form des ersten Aufnahmeteils 4 begrenzt einen ersten Aufnahmeraum 4d (siehe Figur 4), der von einem ersten Aufnahmeschenkel 4a und einem zweiten Aufnahmeschenkel 4b des ersten Aufnahmeteils 4 gebildet wird. Die Aufnahmeschenkel 4a, 4b sind parallel zueinander angeordnet und über einen ersten Steg 4c miteinander verbunden. Hierbei ist der erste Steg 4c rechtwinklig bezüglich den Aufnahmeschenkeln 4a, 4b ausgerichtet (siehe Figuren 3 und 4). An von dem ersten Steg 4c abgewandten Enden des ersten Aufnahmeschenkels 4a und des zweiten Aufnahmeschenkels 4b schließen sich in etwa rechtwinklig, vorzugsweise in einem Winkel von 85°, erste Auflageteile 4e an. Die ersten Auflageteile 4e verlaufen daher in etwa parallel zu dem ersten Steg 4c des ersten Aufnahmeteils 4 aufeinander zu und bilden eine vom ersten Steg 4c weg zeigende erste Öffnung 4f (siehe auch Figuren 4 und 5). Der erste Aufnahmeraum 4d ist außer über die erste Öffnung 4f auch über eine zweite Öffnung 4j und eine dritte Öffnung 4k (siehe auch Figuren 3 und 5) zugänglich, die an einander gegenüberliegenden und jeweils in Längsrichtung L zeigenden Enden des ersten Aufnahmeteils 4 ausgebildet sind. Die beiden Öffnungen 4j, 4k werden von dem ersten Steg 4c, den Aufnahmsschenkeln 4a, 4b und den ersten Auflageteilen 4e begrenzt.

Der erste Steg 4c weist bezogen auf die Längsrichtung L ein geringeres Längsmaß als die ersten und zweiten Aufnahmeschenkel 4a, 4b auf und bildet hierdurch an der dritten Öffnung 4k einen zurückspringenden Absatz. Durch den Absatz des ersten Stegs 4c gegenüber den Aufnahmeschenkeln 4a, 4b und den ersten Auflageteilen 4e weist das die dritte Öffnung 4k umrandende Ende des ersten Aufnahmeteils 4 in Längsrichtung L gesehen eine unebene Stirnfläche auf. An dem gegenüberliegenden Ende des ersten Aufnahmeteils 4 ist hingegen eine ebene Stirnfläche ausgebildet, die die zweite Öffnung 4j umrandet.

Außerdem erstrecken sich ausgehend von dem ersten Steg 4c zwei beabstandet und parallel zueinander verlaufende erste und zweite Aufnahmearme 4l, 4m, die eine Nut für die Aufnahme des oberen zweiten Leitarms 7b des ersten Leitteils 7 begrenzen (siehe Figuren 3 und 4). Die Aufnahmearme 41, 4m verlaufen insbesondere von dem ersten Steg 4c weggerichtet und hierbei entgegengesetzt und parallel zu den Aufnahmeschenkeln 4a, 4b. Der Abstand zwischen den Aufnahmearmen 4l, 4m ist geringer als der Abstand zwischen den Aufnahmeschenkeln 4a, 4b, wodurch im Bereich des ersten Stegs 4c absatzförmige erste Schulterbereiche 4i ausgebildet werden.

Des Weiteren sind in dem ersten Steg 4c eine erste Bohrung 4g für die erste Schraube 15a und eine zweite Bohrung 4h für die dritte Schraube 16a vorgesehen. Die Bohrungen 4g, 4h sind in der Längsrichtung L gesehen voneinander beabstandet und bezogen auf den Abstand der Aufnahmeschenkel 4a, 4b sowie der Aufnahmearme 4l, 4m mittig in dem ersten Steg 4c angeordnet (siehe auch Figur 3).

In beiden Aufnahmeteilen 4, 5 ist jeweils zusätzlich eine durchgehende erste Stiftbohrung 4n beziehungsweise zweite Stiftbohrung 5n für ein als Stift 17 ausgebildetes erstes Sicherungsmittel eines Sicherungsmechanismus vorgesehen, die waagerecht durch die Aufnahmearme 4l, 4m, 5l, 5m sowie durch einen oberen Bereich des Stegs 4c, 5c durch den Steg 4c, 5c verläuft (siehe auch Figur 3). Die Stiftbohrungen 4n, 5n sind jeweils auf der von dem Steg 4c, 5c abgewandten Seite der ersten Bohrung 4g, 5g angeordnet. Außerdem verlaufen die Stiftbohrungen 4n, 5n sowohl quer zur Längsrichtung L als auch zu den Aufnahmearmen 4l, 4m, 5l, 5m und zu den Bohrungen 4g, 4h, 5g, 5h.

In die Stiftbohrungen 4n, 5n kann jeweils ein Stift 17 für den untenstehend beschriebenen Sicherungsmechanismus zum Herstellen des Betriebszustands, das heißt das Verbinden der ersten und zweiten Verbindungseinheiten 11, 12 mit dem Verbindungsteil 6, eingesetzt werden. Hierbei ragt der Stift 17 mit seinen Enden in Richtung der Stiftbohrungen 4n, 5n seitlich aus den Aufnahmearmen 41, 4m, 5l, 5m heraus. Bei der in Figur 2 gezeigten Ausführungsform ist ein Stift 17 in die zweite Stiftbohrung 5n des zweiten Aufnahmeteils 5 eingebracht und in der von dem Verbindungsteil 6 verdeckten ersten Stiftbohrung 4n des ersten Aufnahmeteils 4 ist kein Stift 17 vorgesehen. Es ist ebenso möglich, das erste Sicherungsmittel beziehungsweise den Stift 17 einteilig in die Aufnahmeteile 4, 5 zu integrieren oder anderweitig an der entsprechenden Verbindungseinheit 11, 12 vorzusehen.

Das Leitteil 7 umfasst einen ersten Steg 7c (siehe Figur 3), an dessen Enden sich jeweils rechtwinklig ein erster Leitarm 7a und ein mit einer ersten Bohrung 7f und einer zweiten Bohrung 7g versehener zweiter Leitarm 7b anschließen. Die Leitarme 7a, 7b weisen bei einer Ausrichtung gemäß den Figuren 2, 3 und 4 in Längsrichtung L gegenüber dem entsprechenden Maß der Aüfnahmeschenkel 4a, 4b eine identische Länge auf. Damit das Verbinden des ersten Leitteils 7 mit dem ersten Aufnahmeteil 4 und der ersten Stromschiene 2 in der nachfolgend beschriebenen Weise mittels der ersten Schraube 15a möglich ist, sind die Bohrungen 7f, 7g auf die Positionen der Bohrungen 4g, 4h abgestimmt angeordnet. Mit anderen Worten liegen die Bohrungen 4g, 7f und die Bohrungen 4h, 7g jeweils konzentrisch übereinander, wenn der zweite Leitarm 7b und das erste Aufnahmeteil 4 bündig übereinander positioniert sind.

Zur Herstellung der ersten Verbindungseinheit 11 ist das erste Leitteil 7 mit dem ersten Leitarm 7a durch die dritte Öffnung 4k in den ersten Aufnahmeraum 4d gesteckt, also an dem Ende des ersten Aufnahmeteils 4, an dem der erste Steg 4c den Absatz ausbildet. Hierbei liegt der erste Steg 7c des ersten Leitteils 7 im zurückspringenden Bereich der unebenen Stirnfläche an dem ersten Steg 4c an und der zweite Leitarm 7b des ersten Leitteils 7 ist außerhalb des ersten Aufnahmeraumes 4d und oberhalb des ersten Stegs 4c zwischen den ersten und zweiten Aufnahmearmen 4l, 4m angeordnet. Eine Berührung des zweiten Leitarms 7b und des ersten Stegs 4c findet nicht statt. Mit anderen Worten ist der Abstand zwischen den Leitarmen 7a, 7b so dimensioniert, dass die Leitarme 7a, 7b den ersten Steg 4c umgreifen können beziehungsweise eine Aufnahme des ersten Stegs 4c im Bereich einer ersten Innenseite 7d zwischen den Leitarmen 7a, 7b mit leichtem Spiel möglich ist (siehe Figuren 3 und 4). Das erste Ende 2a der ersten Stromschiene 2 ist durch die der dritten Öffnung 4k gegenüberliegende zweite Öffnung 4j und unterhalb des ersten Leitarms 7a in den ersten Aufnahmeraum 4d eingesteckt.

Wie in Figur 2 dargestellt, ist es ebenfalls möglich, zusammen mit der ersten Stromschiene 2 zusätzlich das Zwischenteil 9 in den ersten Aufnahmeraum 4d einzustecken, das zwischen dem ersten Leitarm 7a und dem ersten Ende 2a der ersten Stromschiene 2 angeordnet ist. Durch das Einschieben eines entsprechenden Zwischenteils 9 ist ein Festklemmen an der ersten Stromschiene 2 auch dann möglich, wenn der zweite Leitarm 7b ansonsten aufgrund der geringen Dicke der ersten Stromschiene 2 auf dem ersten Steg 4c des ersten Aufnahmeteils 4 aufläge und im ersten Aufnahmeraum 4d dennoch ein die Klemmwirkung verhindernder Freiraum zwischen der ersten Außenseite 7e des ersten Leitarms 7a des ersten Leitteils 7 und der ersten Stromschiene 2 bestehen bliebe. In Abhängigkeit der jeweiligen Abmessungen der ersten Stromschiene 2 kann ein derartiger Freiraum durch die Verwendung eines entsprechenden Zwischenteils 9 oder unterschiedlich bemessener erster Leitteile 7, insbesondere unterschiedlich dimensionierter Leitarme 7a, 7b, hinsichtlich des ersten Aufnahmeteils 4 angepasst werden.

Aufgrund des dickeren Querschnitts der zweiten Stromschiene 3 ist daher für selbige im hier dargestellten Ausführungsbeispiel ein Zwischenteil 9 nicht vorgesehen, prinzipiell jedoch selbstverständlich auch einsetzbar. Auch stabilisiert das Zwischenteil 9 dünne Stromschienen 2, 3 im Bereich des Verbinders 1. In jedem Fall muss jedoch durch ein entsprechend bemessenes erstes Leitteil 7 gewährleistet sein, dass der zweite Leitarm 7b mit seiner ersten Außenseite 7e zwischen den Aufnahmearmen 41, 4m des ersten Aufnahmeteils 4 von dessen ersten Steg 4c weggerichtet hinausragt, um von dem Verbindungsteil 6 kontaktiert werden zu können (siehe Figuren 4 und 5).

Die erste Stromschiene 2, das erste Leitteil 7 und ein etwaiges Zwischenteil 9 werden so in den ersten Aufnahmeraum 4d eingesteckt, dass das erste Ende 2a der ersten Stromschiene 2 mit einer ersten Unterseite 2b an den ersten Auflageteilen 4e aufliegt und hierbei mit einer ersten Oberseite 2c an einer ersten Außenseite 7e an dem ersten Leitarm 7a oder an dem Zwischenteil 9 flächig anliegt (siehe auch Figur 4). Auf diese Weise ist eine Strom- beziehungsweise Spannungsübertragung von der ersten Oberseite 2c der ersten Stromschiene 2 direkt auf die erste Außenseite 7e des ersten Leitteils 7 oder entsprechend indirekt über das Zwischenteil 9 auf das erste Leitteil 7 möglich.

Um das erste Aufnahmeteil 4 zusammen mit dem ersten Leitteil 7 und einem eventuell vorgesehenen Zwischenteil 9 an dem ersten Ende 2a der ersten Stromschiene 2 anzuklemmen, ist die erste Schraube 15a in das Gewinde der in dem ersten Steg 4c des ersten Aufnahmeteils 4 vorgesehenen ersten Bohrung 4g eingedreht (siehe Figur 3). Wie zuvor bereits angedeutet ist die in dem zweiten Leitarm 7b vorgesehene erste Bohrung 7f hierbei so ausgerichtet, dass sie bei einem weitest möglich in den ersten Aufnahmeraum 4d eingesteckten Leitteil 7 konzentrisch zu der entsprechenden ersten Bohrung 4g in dem bündig darüber angeordneten ersten Steg 4c ausgerichtet ist. Somit liegen beide erste Bohrungen 4g, 7f übereinander und die erste Schraube 15a ist durch die erste Bohrung 7f in dem zweiten Leitarm 7b zugänglich.

Das Eindrehen der ersten Schraube 15a erfolgt so weit, dass die erste Schraube 15a in Richtung der ersten Aufnahmeteile 4e aus der ersten Bohrung 4g des ersten Stegs 4c teilweise austritt und dadurch an der ersten Innenseite 7d an dem ersten Leitarm 7a zur Auflage kommt. Durch Aufbringen eines hinreichend großen Momentes beziehungsweise einer entsprechenden Klemmkraft sind das erste Leitteil 7, das Zwischenteil 9 sowie das sich an den ersten Auflageteilen 4e des ersten Aufnahmeteils 4 abstützende erste Ende 2a der ersten Stromschiene 2 klemmend mit dem ersten Aufnahmeteil 4 verbunden.

Um für einen möglichst großen Stromfluss eine entsprechend große Kontaktfläche zwischen dem ersten Ende 2a der ersten Stromschiene 2 und dem ersten Leitteil 7 beziehungsweise dessen erster Außenseite 7e zu erreichen, ist das zu verbindende erste Ende 2a möglichst weit in den ersten Aufnahmeraum 4d eingeschoben. Allerdings erfolgt das Einschieben nur so weit, dass es nicht durch die dritte Öffnung 4k am gegenüberilegenden Ende des ersten Aufnahmeraums 4d wieder aus diesem heraus ragt. Bevorzugt ist es daher, dass das erste Ende 2a mit seiner Stirnseite bündig mit der ersten Außenseite 7e des ersten Stegs 7c sowie den entsprechenden Stirnflächen der Aufnahmeschenkel 4a, 4b und der ersten Auflageteile 4e angeordnet ist.

In dem vormontierten Zustand, also bei hergesteliter erster Verbindungseinheit 11, sind die Leitarme 7a, 7b parallel zu dem ersten Steg 4c des ersten Aufnahmeteils 4 ausgerichtet (siehe auch Figur 4). Der erste Steg 7c des ersten Leitteils 7 ist in dieser Anordnung bezogen auf den ersten Steg 4c des ersten Aufnahmeteils 4 rechtwinklig ausgerichtet und liegt mit der ersten Innenseite 7d an dem zurückspringenden Absatz beziehungsweise an dem ersten Steg 4c an. Der erste Steg 7c ist dafür so bemessen, dass die erste Außenseite 7e des ersten Stegs 7c des ersten Leitteils 7 die Unebenheit der Stirnfläche ausgleicht, wobei die erste Außenseite 7e und die entsprechenden stirnseitigen Bereiche der Aufnahmeschenkel 4a, 4b sowie der ersten Aufnahmeteile 4e in einer Ebene liegen. Außerdem sind die Leitarme 7a, 7b so ausgebildet, dass ihre vom ersten Steg 7c des ersten Leitteils 7 abweisenden Enden bündig mit der gegenüberliegenden ebenen Stirnfläche des ersten Aufnahmeteils 4 abschließen. Insbesondere der erste Leitarm 7a ragt also nicht aus dem ersten Aufnahmeraum 4d heraus.

Es ist prinzipiell unerheblich, in welcher Reihenfolge die erste Schiene 2, ein etwaiges Zwischenteil 9 und der erste Leitarm 7a des ersten Leitteils 7 zur Herstellung der ersten Verbindungseinheit 11 in den ersten Aufnahmeraum 4d des ersten Aufnahmeteils 4 eingesteckt werden. Es wird jedoch bevorzugt, zunächst den ersten Leitarm 7a in den ersten Aufnahmeraum 4d einzustecken. Durch Voreindrehen der ersten Schraube 15a in die erste Bohrung 4g des ersten Steges 4c des ersten Aufnahmeteils 4 derart, dass die erste Schraube 15a noch teilweise nach oben aus der ersten Bohrung 4g heraus ragt, kann das erste Leitteil 7 gegen Herausfallen aus dem ersten Aufnahmeraum 4d gesichert werden.

Nach dem anschließenden Einstecken der ersten Stromschiene 2 und eines etwaig vorgesehenen Zwischenteils 9 erfolgt das eigentliche Festklemmen des ersten Leitteils 7 und dadurch auch das Festklemmen des ersten Aufnahmeteils 4 an dem ersten Ende 2a der ersten Stromschiene 2 durch abschließendes Einbeziehungsweise Festdrehen der ersten Schraube 15a, so dass die erste Verbindungseinheit 11 hergestellt ist.

Wie obenstehend bereits ausgeführt, ist in der gleichen Weise die ebenfalls in Figur 2 abgebildete zweite Verbindungseinheit 12 hergestellt, jedoch im hier dargestellten Ausführungsbeispiel ohne Zwischenteil 9.

Des Weiteren ist in Figur 2 das u-förmige Verbindungsteil 6 abgebildet, das in dem dargestellten vormontierten Zustand bereits mittels der dritten Schraube 16a mit der ersten Verbindungseinheit 11 verbunden ist und für die abschließende Herstellung des Betriebszustands noch mit der zweiten Verbindungseinheit 12 zu verbinden ist.

Das Verbindungsteil 6 umfasst einen länglichen ersten Steg 6c, an dessen sich in Längsrichtung L erstreckenden Seiten sich ein erster Verbindungsschenkel 6a und ein zweiter Verbindungsschenkel 6b anschließen (siehe auch Figur 4). Die Verbindungsschenkel 6a, 6b verlaufen in einem ersten Abschnitt 6j ausgehend von einem ersten Verbindungsende 6d parallel zueinander und rechtwinklig bezüglich des ersten Stegs 6c und sind hierbei soweit voneinander beabstandet, dass zwischen Ihnen der erste Steg 4c des ersten Aufnahmeteils 4 zumindest teilweise sowie der darüber und zwischen den Aufnahmearmen 4l, 4m des ersten Aufnahmeteils 4 angeordnete zweite Leitarm 7b des ersten Leitteils 7 zusammen mit den Aufnahmearmen 4l, 4m aufgenommen werden können. Die Verbindungsschenkel 6a, 6b weisen jeweils eine von dem ersten Steg 6c wegzeigende Grundseite 6n auf.

Um das Verbindungsteil 6 an der ersten Verbindungseinheit 11 festzuklemmen, wird letztere zwischen die Verbindungsschenkel 6a, 6b geschoben. Das Einschieben erfolgt derart, dass das erste Verbindungsende 6d des Verbindungsteils 6 und dasjenige Ende der ersten Verbindungseinheit 11, aus dem die erste Stromschiene 2 heraus ragt, in Längsrichtung L gesehen bündig angeordnet sind. Die Verbindungsschenkel 6a, 6b liegen hierbei mit ihren Grundseiten 6n fast in den ersten stufen- beziehungsweise absatzförmigen Schulterbereichen 4i des ersten Aufnahmeteils 4 auf, die jeweils in einem Übergangsbereich zwischen dem ersten Steg 4c, den Aufnahmeschenkeln 4a, 4b und den Aufnahmearmen 4l, 4m ausgebildet sind und in etwa einen rechten Winkel bilden. Zur Auflage kommt das Verbindungsteil 6 hingegen lediglich mit seinem ersten Steg 6c auf dem zweiten Leitarm 7b, der zwischen den Aufnahmearmen 4l, 4m des ersten Aufnahmeteils 4 angeordnet ist. Dadurch liegen auch die Außenseiten der Verbindungsschenkel 6a, 6b mit den Außenseiten der Aufnahmeschenkel 4a, 4b in etwa in einer Ebene.

Außerdem sind im Bereich des ersten Verbindungsendes 6d des ersten Stegs 6c, das der ersten Verbindungseinheit 11 zugeordnet ist, eine erste Bohrung 6f und eine zweite Bohrung 6g vorgesehen (siehe Figur 3). Die Bohrungen 6f, 6g sind derart angeordnet, dass sie nach dem zuvor beschriebenen Zusammenschieben mit der ersten Verbindungseinheit 11 konzentrisch über den Bohrungen 7f, 7g des ersten Leitteils sowie den Bohrungen 4g, 4h des ersten Aufnahmeteils 4 liegen. Dadurch ist zum Einen auch im Betriebszustand die erste Schraube 15a zugänglich. Zum Anderen ist es möglich die dritte Schraube 16a durch die zweite Bohrung 6g des Verbindungsteils 6 und durch die zweite Bohrung 7g des ersten Leitteils 7 hindurch zu stecken und in das Gewinde der zweiten Bohrung 4h des ersten Aufnahmeteils 4 einzudrehen. Durch Eindrehen der dritten Schraube 16a bis diese sich mit ihrem Schraubenkopf mittelbar oder unmittelbar auf der Oberseite des ersten Stegs 6c abstützt sowie durch entsprechendes Festziehen der dritten Schraube 16a wird die erste Verbindungseinheit 11 an dem Verbindungsteil 6 festgeklemmt. Hierbei können zusätzlich allgemein bekannte Befestigungsmittel verwendet werden, beispielsweise eine zwischen dem Schraubenkopf der dritten Schraube 16a und dem ersten Steg 6c angeordnete Unterlegscheibe.

Im Bereich eines zweiten Verbindungsendes 6e verlaufen die Verbindungsschenkel 6a, 6b nicht mehr parallel zueinander, sondern bezogen auf die Längsmittelachse des Verbindungsteils 6 leicht nach außen gespreizt voneinander weg. Hierbei ist der erste Steg 6c gespalten und bildet eine trichterförmige Verbindungsöffnung 6h aus, die sich ausgehend von einem stirnseitigen Rand des zweiten Verbindungsendes 6e in Richtung des ersten Verbindungsendes 6d verjüngt und ab dem Übergang in den ersten Abschnitt 6j einen langlochförmigen Bereich ausbildet. Das Ende des langlochförmigen Bereichs ist in etwa so weit vom stirnseitigen Rand des zweiten Verbindungsendes 6e entfernt wie die in die übereinander liegenden Bohrungen 5h, 8g (siehe Figur 3) teilweise eingedrehte vierte Schraube 16b vom im Bereich der zweiten Öffnung 5j liegenden stirnseitigen Rand des zweiten Aufnahmeteils 5.

Außerdem weisen die Grundseiten 6n der Verbindungsschenkel 6a, 6b gegenüber dem Bereich des ersten Abschnitts 6j in drei weiteren, jeweils geradlinigen Abschnitten 6k, 6l und 6m unterschiedliche Verläufe auf. Ausgehend von dem ersten Verbindungsende 6d verlaufen die Grundseiten 6n in dem ersten Abschnitt 6j im Wesentlichen parallel zu dem ersten Steg 6c des Verbindungsteils 6. Im Bereich des zweiten Verbindungsendes 6e schließen sich an den ersten Abschnitt 6j die zweiten und dritten Abschnitte 6k, 61 an, die in jedem der Verbindungsschenkel 6a, 6b eine als zweites Sicherungsmittel des Sicherungsmechanismus ausgebildete Ausnehmung 6i ausbilden, wobei der zweite Abschnitt 6k in Richtung des Stegs 6c und der dritte Abschnitt 61 von dem Steg 6c weggerichtet verläuft. Mit anderen Worten weisen die Grundseiten 6n des zweiten Abschnitts 6k in Richtung des zweiten Verbindungsendes 6e und die Grundseiten 6n des dritten Abschnitts 6l in Richtung des ersten Verbindungsendes 6d. Die zweiten und dritten Abschnitte 6k, 6l bilden hierbei vorzugsweise einen Winkel α zwischen 60° und 120°, vorzugsweise 90° (siehe Figur 3). Außerdem bilden Grundseiten 6n zwischen den zweiten und driften Abschnitten 6k, 6l einen ersten Radius R1 aus, der in etwa dem Radius des Stifts 17 entspricht und 1,5 mm bis 2 mm, vorzugsweise 1,6 mm, beträgt und in Richtung des Stegs 6c gekrümmt ist. Die Ausnehmungen 6i verlaufen in beiden Verbindungsschenkeln 6a, 6b parallel und keilförmig in Richtung des ersten Stegs 6c.

Der Verlauf der Grundseiten 6n geht im Anschluss an den dritten Abschnitt 6l über einen zweiten Radius R2 in den vierten Abschnitt 6m über. Der zweite Radius R2 ist hierbei von dem Steg 6c weggerichtet gekrümmt und beträgt 0,8 mm bis 1,2 mm, vorzugsweise 1 mm. Der vierte Abschnitt 6m verläuft wie auch der zweite Abschnitt 6k in Richtung des Stegs 6c, das heißt die Grundseiten 6n des vierten Abschnitts 6m weisen in Richtung des zweiten Verbindungsendes 6e. Der vierte Abschnitt 6m bildet hierbei das Ende der Grundseiten 6n, die anschließend in die in Längsrichtung L weisenden Stirnseite des zweiten Verbindungsendes 6e des Verbindungsteils 6 übergehen.

Zur Verbindung des Verbindungsteils 6 mit der zweiten Verbindungseinheit 12 wird diese mit dem Schaft der bereits teilweise in das zweite Aufnahmeteil 5 eingedrehten und dadurch zwischen ihrem Schraubenkopf und dem zweiten Aufnahmeteil 5 einen Spalt S ausbildenden vierten Schraube 16b in Längsrichtung L in die trichterförmige Verbindungsöffnung 6h bis in den langlochförmigen Bereich eingeschoben. Hierbei ist der Schraubenkopf der vierten Schraube 16b auf der von den Verbindungsschenkeln 6a, 6b abgewandten Oberseite des Stegs 6c und die zweite Verbindungseinheit 12 unterhalb des Stegs 6c zwischen den Verbindungsschenkeln 6a, 6b angeordnet.

Die Verbindungsöffnung 6h sowie der zuvor beschriebene Verlauf der Grundseiten 6n der Verbindungsschenkei 6a, 6b in den drei Abschnitten 6k, 6l und 6m und insbesondere die Ausnehmungen 6i bilden durch Zusammenwirken mit dem in der zweiten Stiftbohrung 5n befestigten Stift 17 einen Sicherungsmechanismus für den vormontierten Zustand. Dadurch wird das Einschieben der zweiten Verbindungseinheit 12 zwischen die Verbindungsschenkel 6a, 6b insofern erleichtert, als zunächst der Schaft der vierten Schraube 16b zwischen den gespreizten Verbindungsschenkeln 6a, 6b im Bereich der trichterförmigen Verbindungsöffnung 6h eingefädelt wird. Anschließend werden die Verbindungseinheiten 11, 12 in Längsrichtung L aufeinander zu bewegt, wobei die trichterförmige Verbindungsöffnung 6h sowie der langlochförmige Bereich des Stegs 6c als eine Art Führung für den Schaft der vierten Schraube 16b dienen. Während des Aufeinanderzubewegens treffen die Verbindungsschenkel 6a, 6b mit dem vierten Abschnitt 6m der Grundseiten 6n auf die seitlich aus beiden Aufnahmearmen 51, 5m des zweiten Aufnahmeteils 5 der zweiten Verbindungseinheit 12 herausragenden Enden des Stifts 17. Während des weiteren Einschiebens gleitet der Stift 17 mit seinen Enden zunächst entlang der Grundseiten 6n des vierten Abschnitts 6m, überwindet den Bereich mit dem zweiten Radius R2 und gleitet anschließend entlang des dritten Abschnitts 61 in die Ausnehmungen 6i hinein. Damit sichergestellt ist, dass die Grundseiten 6n flächig und über der gesamten Breite an den Enden des Stifts 17 anliegen beziehungsweise sich abstützen, ragen die Enden des Stifts 17 leicht über die Außenseiten der Verbindungschenkel 6a, 6b hinaus.

Es wird deutlich, dass die Position der Stiftbohrungen 4n, 5n beziehungsweise des darin befestigten Stifts 17 sowie die Ausbildung der Ausnehmungen 6i derart aufeinander abgestimmt sind, dass nach dem Zusammenschieben zwischen dem Steg 6c und dem zweiten Leitarm 8b des zweiten Leitteils 8 der zweiten Verbindungseinheit 12 - analog zur Verbindung der ersten Verbindungseinheit 11 und dem Steg 6c des Verbindungsteils 6 - der mechanische beziehungsweise elektrische Kontakt hergestellt ist und hierbei die Enden des Stifts 17 in dem vormontierten Zustand in einer Verbindungsposition in den Ausnehmungen 6i ruhen. Die Verbindungsposition wird darüber hinaus auch im Betriebszustand, das heißt nach dem abschließenden Eindrehen der vierten Schraube 16b, beibehalten.

In dieser Verbindungsposition werden die Enden des Stifts17 in den Ausnehmungen 6i durch die unter dem Winkel α angestellten zweiten und dritten Abschnitte 6k, 61 der Grundseiten 6n in einer stabilen Gleichgewichtslage gehalten. Durch die dritten und vierten Abschnitte 6l, 6m sowie den Bereich des zweiten Radius R2 bilden die Grundseiten 6n also eine hakenförmige Positioniersicherung aus, die die zweite Verbindungseinheit 12 bei nicht festgezogener vierter Schraube 16b daran hindert, entgegen der Einschubrichtung selbsttätig wieder aus dem Verbindungsteil 6 herauszurutschen. Ein Auseinanderbringen der zweiten Verbindungseinheit 12 und des Verbindungsteils 6 ist folglich erst durch Aufbringen einer entsprechenden Kraft möglich, um insbesondere den Stift 17 aus der Gleichgewichtslage heraus entlang des dritten Abschnitts 6l und über den Radius R2 hinweg zu bewegen. Selbstverständlich kann die Verbindung zwischen den Verbindungseinheiten 11, 12 über das Verbindungsteil 6 auch hergestellt werden, wenn in keiner der Stiftbohrungen 4n, 5n ein Stift 17 vorgesehen ist.

Sobald die zweite Verbindungseinheit 12 vollständig durch die trichterförmige Verbindungsöffnung 6h bis an das Ende des sich anschließenden langlochförmigen Bereichs in die zuvor beschriebene Verbindungsposition eingeschoben ist, grenzen das erste Ende 2a der ersten Stromschiene 2 und das zweite Ende 3a der zweiten Stromschiene 3, der erste Steg 7c des ersten Leitteils 7 und der erste Steg 8c des zweiten Leitteils 8 sowie die entsprechenden stirnseitigen Flächen der Aufnahmeschenkel 4a, 4b, 5a, 5b und der Auflageteile 4e, 5e stoßartig aneinander. Die stoßartige Anordnung kann hinsichtlich der Stirnflächen kontaktbehaftet oder kontaktlos ausgebildet sein. Das heißt, für eine funktionstüchtige Verbindung - insbesondere eine elektrische Verbindung der Stromschienen 2, 3- ist es nicht zwingend erforderlich, dass ein körperlicher beziehungsweise elektrisch leitfähiger Kontakt zwischen den zuvor genannten stirnseitigen Flächen hergestellt ist. Aufgrund der elektrisch leitenden Verbindung über das Verbindungsteil 6 können die Stirnflächen im Betriebszustand daher auch in Längsrichtung L voneinander beabstandet fixiert sein.

Durch anschließendes Festziehen der vierten Schraube 16b kommen deren Schraubenkopf oder eine etwaig vorgesehene Unterlegscheibe auf der Oberseite des ersten Stegs 6c zur Auflage und stützen sich somit an dem Steg 6c ab. Hierbei kommen die Grundseiten 6n der Verbindungsschenkel 6a, 6b analog zu den ersten Schulterbereichen 4i des ersten Aufnahmeteils 4 auf gleichartig ausgebildeten zweiten Schulterbereichen 5i des zweiten Aufnahmeteils 5 jedoch ebenfalls nicht zur Auflage. In vergleichbarer Weise wie bei der ersten Schraube 15e der ersten Verbindungseinheit 11 ist auch die zweite Schraube 15b im Betriebszustand durch die trichterförmige Verbindungsöffnung 6h sowie die übereinander liegenden zweiten Bohrungen 5h, 8g zugänglich.

Figur 3 zeigt eine Ansicht der Schleifleitung 14 gemäß Figur 2 in einem Längsschnitt entlang einer in Längsrichtung L vertikal ausgerichteten Mittellängsebene. Besonders gut erkennbar ist der bereits vorstehend beschriebene Aufbau der ersten Verbindungseinheit 11 mit dem Zwischenteil 9 und der in gleicher Weise, jedoch ohne ein Zwischenteil 9 aufgebauten zweiten Verbindungseinheit 12 mit dem Stift 17 in dem vormontierten Zustand. Für die zweite Verbindungseinheit 12 gelten die bezüglich der ersten Verbindungseinheit 11 folgenden Ausführungen entsprechend.

Es ist das erste Leitteil 7 dargestellt, das mit dem ersten Leitarm 7a in den ersten Aufnahmeraum 4d eingeschoben ist und hierbei zwischen den Leitarmen 7a, 7b den ersten Steg 4c des ersten Aufnahmeteils 4 aufnimmt. Hierbei ist auch der zurückspringende Absatz des ersten Steges 4c beziehungsweise der unebenen Stirnfläche des ersten Aufnahmeteils 4 erkennbar. An diesem liegt die erste Innenseite 7d des ersten Steges 7c des ersten Leitteils 7 an. Darüber hinaus wird eine würfelartige beziehungsweise quaderartige und kompakte äußere Form der Verbindungseinheiten 11, 12 deutlich. Diese ergibt sich insbesondere durch die in Längsrichtung L gesehen bündige Anordnung der Enden der Leitarme 7a, 7b, der ersten Außenseite 7e des ersten Stegs 7c sowie des ersten Endes 2a der ersten Stromschiene 2 gegenüber den in Längsrichtung L gesehenen Stirnflächen der Aufnahmeschenkel 4a, 4b.

Außerdem zeigt Figur 3 die Positionen der Bohrungen 4g, 4h in dem ersten Steg 4c des ersten Aufnahmeteils 4, der Bohrungen 7f, 7g in dem zweiten Leitarm 7b des ersten Leitteils 7 sowie der Bohrungen 6f, 6g und der trichterförmigen Verbindungsöffnung 6h in dem ersten Steg 6c des Verbindungsteils 6, die allesamt entlang der Längsrichtung L angeordnet sind. Auch ist die erste Schraube 15a gezeigt, der in den ersten Steg 4c eingedreht ist und dadurch das erste Aufnahmeteil 4, das Zwischenteil 9 und den ersten Leitarm 7a des ersten Leitteils 7 an dem darunter liegend in den ersten Aufnahmeraum 4d eingesteckten ersten Ende 2a der ersten Stromschiene 2 festklemmt. Die erste Stromschiene 2 kommt hierbei auf den ersten Auflageteilen 4e, die in etwa lotrecht, vorzugsweise jedoch in einem Winkel von 85° zur Mittellängsebene verlaufen, zur Auflage. In Figur 3 sind diejenigen Auflageteile 4e und 5e gezeigt, die sich an die ersten Aufnahmeschenkel 4a, 5a des ersten beziehungsweise zweiten Aufnahmeteils 4, 5 anschließen.

Der Figur 3 ist auch zu entnehmen, dass das Verbindungsteil 6 mittels der dritten Schraube 16a an der ersten Verbindungseinheit 11 angeklemmt ist. Bezüglich der zweiten Verbindungseinheit 12 ist außerdem zu erkennen, dass die zweite Schraube 15b verglichen mit der ersten Schraube 15a aufgrund der dickeren zweiten Stromschiene 3 weniger weit in die Bohrung 5g eingedreht ist und beim Festklemmen der zweiten Stromschiene 3 kaum aus der Bohrung 5g heraus in den Aufnahmeraum 5d hineinragt. Die vierte Schraube 16b ist bereits teilweise in die zweite Verbindungseinheit 12 beziehungsweise die zweite Bohrung 5h des ersten Stegs 5c des zweiten Aufnahmeteils 5 eingedreht. In diesem vormontierten Zustand kann der oberhalb des zweiten Leitarms 8b frei liegende Schaft der vierten Schraube 16b in Längsrichtung L in die Verbindungsöffnung 6h des Verbindungsteils 6 eingeschoben und zur abschließenden Herstellung der Verbindung zwischen den Stromschienen 2, 3 festgedreht werden.

Auch zeigt die Figur 3 den in die Stiftbohrung 5n eingesetzten Stift 17 sowie die vier Abschnitte 6j bis 6m und insbesondere die Ausnehmung 6i der Grundseite 6n des ersten Verbindungsschenkels 6a des Verbindungsteils 6. Besonders gut erkennbar sind die Radien R1 und R2 sowie der von den zweiten und dritten Abschnitten 6k, 61 gebildete Winkel α. Die Stiftbohrung 4n, in die jedoch kein Stift 17 eingesetzt ist, ist ebenfalls gezeigt.

In Figur 4 ist eine Ansicht der ersten Stromschiene 2 in einem ersten Querschnitt A-A gemäß Figur 3 gezeigt. Der erste Querschnitt A-A verläuft mittig durch die zweiten Bohrungen 6g, 7g, 4h sowie die hierin eingeschraubte dritte Schraube 16a, die das Verbindungsteil 6 an der ersten Verbindungseinheit 11 befestigt. Hierbei liegen die Verbindungsschenkel 6a, 6b an den ersten Schulterbereichen 4i des ersten Aufnahmeteils 4 jedoch nur fast mit den Grundseiten 6n auf. Gut erkennbar ist außerdem der schichtweise Aufbau der ersten Verbindungseinheit 11. Dieser wird von dem ersten Ende 2a der ersten Stromschiene 2, dem Zwischenteil 9 und dem ersten Leitarm 7a des ersten Leitteils 7, die zusammen flächig aneinander liegen und parallel zueinander ausgerichtet in den ersten Aufnahmeraum 4d eingeschoben und von diesem aufgenommen sind, sowie von dem ersten Steg 4c des ersten Aufnahmeteils 4 und dem darüber liegend angeordneten zweiten Leitarm 7b des ersten Leitteils gebildet. Gut erkennbar sind hierbei die sich entgegengesetzt der Aufnahmeschenkel 4a, 4b von dem Steg 4c weg erstreckenden Aufnahmearme 4l, 4m, zwischen denen der zweite Leitarm 7b so angeordnet ist, dass einerseits dessen Außenseite 7e über die Aufnahmearme 4l, 4m hinausragt und andererseits zwischen dessen Innenseite 7d und dem Steg 4c ein Freiraum verbleibt.

Darüber hinaus zeigt Figur 4 die erste Schraube 15a, der aus der ersten Bohrung 4g des ersten Aufnahmeteils 4 heraus und in den ersten Aufnahmeraum 4d hinein ragt und wie bereits zuvor beschrieben den ersten Leitarm 7a, das Zwischenteil 9 und das erste Ende 2a der ersten Stromschiene 2 in Richtung der ersten Auflageteile 4e des ersten Aufnahmeteils 4 drückt und über die auf diese Weise aufgebrachte Klemmkraft den Zusammenhalt der ersten Verbindungseinheit 11 herstellt beziehungsweise sichert. Hierbei ist der Abstand zwischen den Leitarmen 7a, 7b, insbesondere deren ersten Innenseiten 7d, so bemessen, dass zwischen selbigen der erste Steg 4c des ersten Aufnahmeteils 4 aufgenommen werden kann.

Die in Figur 4 gezeigte Ansicht ergibt sich darüber hinaus in ähnlicher Weise als Außenansicht bei einer Betrachtung des ersten Verbindungsendes 6d in Richtung der zweiten Öffnung 4j, wobei jedoch die dritte Schraube 16a - vergleichbar mit der Darstellung in Figur 5 - nicht beziehungsweise nur mit ihrem Schraubenkopf sichtbar ist. Mit Ausnahme der ersten Stromschiene 2 und eventuell des Zwischenteils 9 entspricht die Schnittansicht der Figur 4 im Übrigen der sich ergebenden Außenansicht der in Längsrichtung L zeigenden stirnseitigen Flächen der Aufnahmeschenkel 4a, 4b, des ersten Stegs 4c und der ersten Auflageteile 4e des ersten Aufnahmeteils 4, der Verbindungsschenkel 6a, 6b und des ersten Stegs 6c des Verbindungsteils 6 sowie der Leitarme 7a, 7b des ersten Leitteils 7, die allesamt bündig angeordnet sind, das heißt gemeinsam in einer parallel zur Querschnittsebene A-A verlaufenden Ebene liegen. Darüber hinaus wäre jedoch bei einer entsprechenden Außenansicht noch ein Teil der Innenseite 7e des ersten Stegs 7c des ersten Leitteils 7 sichtbar, mit der der erste Steg 7c des ersten Leitteils 7 im Bereich der dritten Öffnung 4k am ersten Steg 4c des ersten Aufnahmeteils 4 anliegt.

In Figur 5 ist eine Ansicht der ersten Stromschienen 2 in einem zweiten Querschnitt B-B gemäß Figur 3 gezeigt, wobei lediglich das an der ersten Verbindungseinheit 11 über die dritte Schraube 16a befestigte Verbindungsteil 6 geschnitten dargestellt ist. Außerdem ist der erste Steg 7c des ersten Leitteils 7, das mit dem ersten Leitarm 7a über die dritte Öffnung 4k in den ersten Aufnahmeraum 4d des ersten Aufnahmeteils 4 eingesteckt ist, mit seiner ersten Außenseite 7e gezeigt. Die erste Außenseite 7e, die aus der Querschnitts- beziehungsweise Zeichenebene heraus zeigenden stirnseitigen Flächen der Aufnahmeschenkel 4a, 4b, der ersten Auflageteile 4e, des Zwischenteils 9 sowie des ersten Endes 2a der ersten Stromschiene 2 sind derart bündig angeordnet, dass sie in einer parallel zur Querschnittebene verlaufenden Ebene liegen.

Die vorstehenden Ausführungen hinsichtlich der Figuren 4 und 5 gelten unter Berücksichtigung des fehlenden Zwischenteils 9 entsprechend für die zweite Verbindungseinheit 12.

Auf die beschriebene Art und Weise wird der Betriebszustand hergestellt, in dem die erste Stromschiene 2 und die zweite Stromschiene 3 einer der Schleifleitungen 14 sowohl mechanisch als auch elektrisch über den Verbinder 1 miteinander verbunden sind. Um die elektrische Verbindung über den Verbinder 1 zu ermöglichen, ist es daher erforderlich, dass neben den Stromschienen 2, 3 selbst zumindest das erste Leitteil 7, das zweite Leitteil 8 sowie das Verbindungsteil 6 und die etwaigen Zwischenteile 9jeweils aus einem elektrisch hoch leitfähigen Material bestehen, beispielsweise aus Kupferlegierungen oder anderen metallischen Legierungen. Auch wenn es prinzipiell möglich ist, verschiedene elektrisch leitfähige Materialien zu verwenden, ist es bevorzugt, dass die genannten leitenden Teile aus dem gleichen Material oder zumindest aus Materialien mit gleichwertigen spezifischen elektrischen Leitfähigkeiten beziehungsweise Widerständen hergestellt sind.

Das erste Aufnahmeteil 4 und das zweite Aufnahmeteil 5 sind vorwiegend für die mechanische Verbindung beziehungsweise Befestigung der Stromschienen 2, 3 an dem Verbindungsteil 6 vorgesehen und bestehen daher aus einem Material mit entsprechend geeigneter mechanischer Festigkeit. Da durch die Verwendung der Leitteile 7, 8 die elektrische Verbindung zwischen den Stromschienen 2, 3 bereits hinreichend leistungsfähig hergestellt ist, können die Aufnahmeteile 4, 5 prinzipiell auch aus einem elektrisch isolierenden Material oder aus einem solchen Material bestehen, das gegenüber den Leitteilen 7, 8 eine geringere spezifische elektrische Leitfähigkeit aufweist.

Somit ist es prinzipiell möglich, eine funktionale Trennung der Aufnahmeteile 4, 5 und der Leitteile 7, 8 und damit einhergehend eine Entkopplung der mechanischen und der elektrischen Verbindung der Stromschienen 2, 3 mit dem Verbindungsteil 6 in der Form zu erreichen, dass die Aufnahmeteile 4, 5 aus elektrisch isolierendem Material bestehen und somit lediglich eine mechanische Funktion übernehmen, wohingegen die elektrische Verbindung ausschließlich über die zusätzlich eingebrachten Leitteile 7, 8 erfolgt.

Die c-förmig ausgebildeten Aufnahmeteile 4, 5 ermöglichen des Weiteren, dass auch im Betriebszustand die zwischen den Schenkeln 4a, 4b, 5a, 5b der Aufnahmeteile 4, 5 befestigten Stromschienen 2, 3 im Bereich des Verbinders 1 über die ersten Öffnungen 4f, 5f zugänglich sind. Somit können die Stromschienen 2, 3 von einem entlang der Schleifleitungen 14 verfahrenden Stromabnehmerwagen über deren gesamte Länge - also auch im Bereich von Verbindern 1 - elektrisch kontaktiert werden (siehe auch Figuren 1, 4 und 5).

Es ist selbstverständlich auch möglich, dass die Leitteile 7, 8 abweichend von der in den Figuren 1 bis 5 gezeigten Ausführungsform nicht u-förmig ausgebildet sind. Es ist vielmehr jede Form denkbar, sofern diese gewährleistet, dass das jeweilige Leitteil 7, 8 in dem Betriebszustand sowohl mit der entsprechend zugehörigen Stromschiene 2, 3 als auch mit dem Verbindungsteil 6 elektrisch verbunden ist. Insofern müssen die Leitteile 7, 8 nicht als starre U-Stücke ausgebildet sein. Es ist ebenso denkbar, dass eine in etwa u-förmige oder sonstige Gestalt flexibel beziehungsweise biegsam ausgebildet ist. Insbesondere können die Leitteile 7, 8 hierbei als ein bandförmiges Geflecht aus einem entsprechend leitfähigen Material bestehen. Derartig ausgebildete flexible Leitteile 7, 8 sind dann analog zu den Leitarmen 7a, 7b, 8a, 8b des zuvor beschriebenen Ausführungsbeispiels klemmend und elektrisch mit den Stromschienen 2, 3, den Aufnahmeteilen 4, 5 sowie dem Verbindungsteil 6 zu verbinden.

Um die Strombelastbarkeit gegenüber einem Verbinder 1 ohne entsprechende Leitteile 7, 8 zu erweitern, muss die Verbindung der Aufnahmeteile 4, 5 mit dem Verbindungsteil über die entsprechenden Leitteile 7, 8 insbesondere in Form einer Parallelschaltung ausgebildet beziehungsweise durch alternative Ausführungsformen der Leitteile 7, 8 möglich sein. Die Verbindung der Stromschienen 2, 3 mit dem Verbindungsteil 6 über die Aufnahmeteile 4, 5 bildet ansonsten hinsichtlich der Strombelastbarkeit einen Engpass, der auf diese Weise bypassartig umgangen beziehungsweise überbrückt werden kann.

### Bezugszeichenliste

- 1: Verbinder
- 2: erste Stromschiene
- 2a: erstes Ende
- 2b: erste Unterseite
- 2c: erste Oberseite
- 3: zweite Stromschiene
- 3a: zweites Ende
- 3b: zweite Unterseite
- 3c: zweite Oberseite
- 4: erstes Aufnahmeteil
- 4a: erster Aufnahmeschenkel
- 4b: zweiter Aufnahmeschenkel
- 4c: erster Steg
- 4d: erster Aufnahmeraum
- 4e: erste Auflageteile
- 4f: erste Öffnung
- 4g: erste Bohrung
- 4h: zweite Bohrung
- 4i: erste Schulterbereiche
- 4j: zweite Öffnung
- 4k: dritte Öffnung
- 4l: erste Aufnahmearme
- 4m: zweite Aufnahmearme
- 4n: erste Stiftbohrung
- 5: zweites Aufnahmeteil
- 5a: erster Aufnahmeschenkel
- 5b: zweiter Aufnahmeschenkel
- 5c: erster Steg
- 5d: zweiter Aufnahmeraum
- 5e: zweite Auflageteile
- 5f: erste Öffnung
- 5g: erste Bohrung
- 5h: zweite Bohrung
- 5i: zweite Schulterbereiche
- 5j: zweite Öffnung
- 5k: dritte Öffnung
- 5l: erste Aufnahmearme
- 5m: zweite Aufnahmearme
- 5n: zweite Stiftbohrung
- 6: Verbindungsteil
- 6a: erster Verbindungsschenkel
- 6b: zweiter Verbindungsschenkel
- 6c: erster Steg
- 6d: erstes Verbindungsende
- 6e: zweites Verbindungsende
- 6f: erste Bohrung
- 6g: zweite Bohrung
- 6h: Verbindungsöffnung
- 6i: Ausnehmung
- 6j: erster Abschnitt
- 6k: zweiter Abschnitt
- 61: dritter Abschnitt
- 6m: vierter Abschnitt
- 6n: Grundseite
- 7: erstes Leitteil
- 7a: erster Leitarm
- 7b: zweiter Leitarm
- 7c: erster Steg
- 7d: erste Innenseite
- 7e: erste Außenseite
- 7f: erste Bohrung
- 7g: zweite Bohrung
- 8: zweites Leitteil
- 8a: erster Leitarm
- 8b: zweiter Leitarm
- 8c: erster Steg
- 8d: zweite Innenseite
- 8e: zweite Außenseite
- 8f: erste Bohrung
- 8g: zweite Bohrung
- 9: Zwischenteil
- 11: erste Verbindungseinheit
- 12: zweite Verbindungseinheit
- 13: Schleifleitungsprofil
- 13a: Innenraum
- 13b: Abdeckkappe
- 14: Schleifleitung
- 15a: erste Schraube
- 15b: zweite Schraube
- 16a: dritte Schraube
- 16b: vierte Schraube
- 17: Stift

- α: Winkel
- L: Längsrichtung
- R1: erster Radius
- R2: zweiter Radius
- S: Spalt

## Patentansprüche

1. Schleifleitung (14) mit mindestens zwei aufeinander folgenden Stromschienen (2, 3), die mit einem Verbinder (1) lösbar miteinander verbindbar sind, mit einem ersten Aufnahmeteil (4), das an einem ersten Ende (2a) einer ersten Stromschiene (2) lösbar befestigt ist, und mit einem zweiten Aufnahmeteil (5), das an einem zweiten Ende (3a) einer zweiten Stromschiene (3) lösbar befestigt ist, und einem Verbindungsteil (6), über das das erste Aufnahmeteil (4) und das zweite Aufnahmeteil (5) in einem Betriebszustand lösbar miteinander verbindbar sind, wobei in dem Betriebszustand das Verbindungsteil (6) zusätzlich zu dem ersten Aufnahmeteil (4) über ein erstes Leitteil (7) mit der ersten Stromschiene (2) und zusätzlich zu dem zweiten Aufnahmeteil (5) über ein zweites Leitteil (8) mit der zweiten Stromschiene (3) elektrisch verbunden ist und das erste Leitteil (7) einen geringeren spezifischen elektrischen Widerstand als das erste Aufnahmeteil (4) und das zweite Leitteil (8) einen geringeren spezifischen elektrischen Widerstand als das zweite Aufnahmeteil (5) aufweist, dadurch gekennzeichent, dass das erste und das zweite leitteil (7.8) lösbar mit dem verbindungsteil (6) verbindbar sind.

2. Schleifleitung (14) nach Anspruch 1, **dadurch gekennzeichnet, dass** das erste Aufnahmeteil (4) zumindest teilweise zwischen dem ersten Leitteil (7) und dem Verbindungsteil (6) und das zweite Aufnahmeteil (5) zumindest teilweise zwischen dem zweiten Leitteil (8) und dem Verbindungsteil (6) angeordnet ist.

3. Schleifleitung (14) nach Anspruch 1 oder 2, **dadurch gekennzeichnet, dass** das erste Aufnahmeteil (4) einen c-förmigen ersten Aufnahmeraum (4d) mit zwei gegenüberliegenden und voneinander beabstandeten ersten Auflageteilen (4e) umfasst, in den das erste Ende (2a) der ersten Stromschiene (2) im Betriebszustand eingesteckt ist und sich klemmend abstützt, und das zweite Aufnahmeteil (5) einen c-förmigen zweiten Aufnahmeraum (5d) mit zwei gegenüberliegenden und voneinander beabstandeten zweiten Auflageteilen (5e) umfasst, in den das zweite Ende (3a) der zweiten Stromschiene (3) im Betriebszustand eingesteckt ist und sich klemmend abstützt.

4. Schleifleitung (14) nach einem der Ansprüche 1 bis 3, **dadurch gekennzeichnet, dass** das erste Leitteil (7) und das zweite Leitteil (8) jeweils u-förmig mit einem ersten Leitarm (7a, 8a) und einem zweiten Leitarm (7b, 8b) ausgebildet sind.

5. Schleifleitung (14) nach Anspruch 4, **dadurch gekennzeichnet, dass** der zweite Leitarm (7b) des ersten Leitteils (7) und der zweite Leitarm (8b) des zweiten Leitteils (8) an dem Verbindungsteil (6), der erste Leitarm (7a) des ersten Leitteils (7) an der ersten Stromschiene (2) und der erste Leitarm (8a) des zweiten Leitteils (8) an der zweiten Stromschiene (3) anliegen.

6. Schleifleitung (14) nach einem der Ansprüche 3 bis 5, **dadurch gekennzeichnet, dass** das erste Leitteil (7) zumindest teilweise von dem ersten Aufnahmeraum (4d) des ersten Aufnahmeteils (4) und das zweite Leitteil (8) zumindest teilweise von dem zweiten Aufnahmeraum (5d) des zweiten Aufnahmeteils (5) aufgenommen ist.

7. Schleifleitung (14) nach einem der Ansprüche 4 bis 6, **dadurch gekennzeichnet, dass** das erste Leitteil (7) und das erste Aufnahmeteil (4) so angeordnet sind, dass ein erster Steg (4c) des ersten Aufnahmeteils (4) zwischen den Leitarmen (7a, 7b) des ersten Leitteils (7) angeordnet ist, und das zweite Leitteil (8) und das zweite Aufnahmeteil (5) so angeordnet sind, dass ein zweiter Steg (5c) des zweiten Aufnahmeteils (5) zwischen den Leitarmen (8a, 8b) des zweiten Leitteils (8) angeordnet ist.

8. Schleifleitung (14) nach einem der Ansprüche 1 bis 7, **dadurch gekennzeichnet, dass** die erste Stromschiene (2), das erste Aufnahmeteil (4) und das erste Leitteil (7) miteinander zu einer ersten Verbindungseinheit (11) lösbar verbunden sind und die zweite Stromschiene (3), das zweite Aufnahmeteil (5) und das zweite Leitteil (8) miteinander zu einer zweiten Verbindungseinheit (12) lösbar verbunden sind.

## Claims

1. Contact line (14) having at least two successive busbars (2, 3) which can be detachably connected together by means of a connector (1), having a first receiving part (4) which is detachably attached to a first end (2a) of a first busbar (2), and having a second receiving part (5) which is detachably attached to a second end (3a) of a second busbar (3), and a connecting part (6) via which the first receiving part (4) and the second receiving part (5) can be detachably connected together in an operating state, wherein in the operating state in addition to the first receiving part (4) the connecting part (6) is electrically connected to the first busbar (2) via a first conductive part (7) and in addition to the second receiving part (5) the connecting part is electrically connected to the second busbar (3) via a second conductive part (8), and the first conductive part (7) has a lower resistivity than the first receiving part (4) and the second conductive part (8) has a lower resistivity than the second receiving part (5), **characterised in that** the first and the second conductive parts (7, 8) can be detachably connected to the connecting part (6)

2. Contact line (14) as claimed in claim 1, **characterised in that** the first receiving part (4) is arranged at least partly between the first conductive part (7) and the connecting part (6) and the second receiving part (5) is arranged at least partly between the second conductive part (8) and the connecting part (6).

3. Contact line (14) as claimed in claim 1 or 2, **characterised in that** the first receiving part (4) has a c-shaped first receiving space (4d) having two opposite and mutually spaced apart first contact parts (4e), into which space the first end (2a) of the first busbar (2) is inserted in the operating state and is supported in a clamping manner, and the second receiving part (5) has a c-shaped second receiving space (5d) having two opposite and mutually spaced apart second contact parts (5e), into which space the second end (3a) of the second busbar (3) is inserted in the operating state and is supported in a clamping manner.

4. Contact line (14) as claimed in any one of claims 1 to 3, **characterised in that** the first conductive part (7) and the second conductive part (8) are each formed to be u-shaped having a first conductive arm (7a, 8a) and a second conductive arm (7b, 8b).

5. Contact line (14) as claimed in claim 4, **characterised in that** the second conductive arm (7b) of the first conductive part (7) and the second conductive arm (8b) of the second conductive part (8) lie against the connecting part (6), the first conductive arm (7a) of the first conductive part (7) lies against the first busbar (2) and the first conductive arm (8a) of the second conductive part (8) lies against the second busbar (3).

6. Contact line (14) as claimed in any one of claims 3 to 5, **characterised in that** the first conductive part (7) is received at least partly by the first receiving space (4d) of the first receiving part (4) and the second conductive part (8) is received at least partly by the second receiving space (5d) of the second receiving part (5).

7. Contact line (14) as claimed in any one of claims 4 to 6, **characterised in that** the first conductive part (7) and the first receiving part (4) are arranged such that a first web (4c) of the first receiving part (4) is arranged between the conductive arms (7a, 7b) of the first conductive part (7), and the second conductive part (8) and the second receiving part (5) are arranged such that a second web (5c) of the second receiving part (5) is arranged between the conductive arms (8a, 8b) of the second conductive part (8).

8. Contact line (14) as claimed in any one of claims 1 to 7, **characterised in that** the first busbar (2), the first receiving part (4) and the first conductive part (7) are detachably connected together to form a first connecting unit (11), and the second busbar (3), the second receiving part (5) and the second conductive part (8) are detachably connected together to form a second connecting unit (12).

## Revendications

1. Ligne de contact (14) comportant au moins deux barres collectrices (2, 3) successives qui sont reliées entre elles de manière amovible par un connecteur (1), un premier élément de réception (4) qui est fixé de manière amovible à une première extrémité (2a) d'une première barre collectrice (2), et un second élément de réception (5) qui est fixé de manière amovible à une seconde extrémité (3a) d'une seconde barre collectrice (3), et un élément de liaison (6) qui permet de relier de manière amovible le premier élément de réception (4) et le second élément de réception (5) dans un état de fonctionnement, dans l'état de fonctionnement, l'élément de liaison (6) est relié électriquement, en plus du premier élément de réception (4), à la première barre collectrice (2) par le biais d'un premier élément conducteur (7) et, en plus du second élément de réception (5), à la seconde barre collectrice (3) par le biais d'un second élément conducteur (8) et le premier élément conducteur (7) a une résistivité électrique inférieure à celle du premier élément de réception (4) et le second élément conducteur (8) a une résistivité électrique inférieure à celle du second élément de réception (5), **caractérisée en ce que** les premier et second éléments conducteurs (7, 8) peuvent être reliés de façon amovible à l'élément de liaison (6).

2. Ligne de contact (14) selon la revendication 1, **caractérisée en ce que** le premier élément de réception (4) est disposé au moins partiellement entre le premier élément conducteur (7) et l'élément de liaison (6) et le second élément de réception (5) est disposé au moins partiellement entre le second élément conducteur (8) et l'élément de liaison (6).

3. Ligne de contact (14) selon la revendication 1 ou 2, **caractérisée en ce que** le premier élément de réception (4) comprend un premier espace de réception (4d) en forme de C, pourvu de deux éléments d'appui (4e) opposés et espacés, dans lequel la première extrémité (2a) de la première barre collectrice (2) est enfichée et supportée par serrage à l'état de fonctionnement et le second élément de réception (5) comprend un second espace de réception (5d) en forme de C, pourvu de deux seconds éléments d'appui (5e) opposés et espacés, dans lequel la seconde extrémité (3a) de la seconde barre collectrice (3) est enfichée et supportée par serrage à l'état de fonctionnement.

4. Ligne de contact (14) selon l'une des revendications 1 à 3, **caractérisée en ce que** le premier élément conducteur (7) et le second élément conducteur (8) ont chacun la forme d'un U pourvu d'un premier bras conducteur (7a, 8a) et d'un second bras conducteur (7b, 8b).

5. Ligne de contact (14) selon la revendication 4, **caractérisé en ce que** le second bras conducteur (7b) du premier élément conducteur (7) et le second bras conducteur (8b) du second élément conducteur (8) sont en appui sur l'élément de liaison (6), le premier bras conducteur (7a) du premier élément conducteur (7) est en appui sur la première barre collectrice (2) et le premier bras conducteur (8a) du second élément conducteur (8) est en appui sur la seconde barre collectrice (3).

6. Ligne de contact (14) selon l'une des revendications 3 à 5, **caractérisée en ce que** le premier élément conducteur (7) est reçu au moins partiellement par le premier espace de réception (4d) du premier élément de réception (4) et le second élément conducteur (8) est reçu au moins partiellement par le second espace de réception (5d) du second élément de réception (5).

7. Ligne de contact (14) selon l'une des revendications 4 à 6, **caractérisée en ce que** le premier élément conducteur (7) et le premier élément de réception (4) sont disposés de telle sorte qu'une première nervure (4c) du premier élément de réception (4) est disposée entre les bras conducteurs (7a, 7b) du premier élément conducteur (7) et le second élément conducteur (8) et le second élément de réception (5) sont disposés de telle sorte qu'une seconde nervure (5c) du second élément de réception (5) est disposée entre les bras conducteurs (8a, 8b) du second élément conducteur (8).

8. Ligne de contact (14) selon l'une des revendications 1 à 7, **caractérisée en ce que** la première barre collectrice (2), le premier élément de réception (4) et le premier élément conducteur (7) sont reliés entre eux de manière amovible pour former une première unité de liaison (11), et la seconde barre collectrice (3), le second élément de réception (5) et le second élément conducteur (8) sont reliés entre eux de manière amovible pour former une seconde unité de liaison (12).
